# EUROPEAN PATENT APPLICATION

(11) **EP 1 790 468 A1**
(43) Date of publication of application: **30.05.2007**
(21) Application number: 05111247.2
(22) Date of filing: 24.11.2005
(51) Int. Cl.: B32B 5/18, B65D 65/40

(54) **Package, blank and method of producing package**

(71) Applicant: Sudnif S. A., 6301 Zug (CH)
(72) Inventor: Andersson, Bo, 238 34, Oxie (SE); Grip, Anders, 260 50, Billesholm (SE)
(74) Representative: Grönlund, Tim Linus Wilhelm

(57) **Abstract**

The present invention relates to a package formed of a laminated package material. The laminated package material comprises a first laminated package material layer (1). The laminated package material further comprises a second laminated package material layer (2) formed of a polymeric foam, and a laminating layer (3) arranged between and binding said laminated package material layers to each other. The first laminated package material layer (1) forms an outside of the package and the second laminated package material layer (2) forms an inside of the package. The invention further relates to a package blank formed of the laminated package material and to a method of producing said package.

## Description

### Field of the Invention

The present invention relates to a package formed of a laminated package material. The package may be adapted for packaging of frozen food products. The invention further relates to a package blank formed of a laminated package material and to a method of producing a package.

### Background Art

A common way of packaging frozen food products is by using a paper container, optionally coated with a thin layer of polyethylene, in the form of a capsule or box. Such a capsule have poor insulating properties resulting in relatively rapid thawing of the food products when the capsule is not kept in a freezer. This is especially a problem in countries with a warm climate or in the summertime.

Thawing of the food products results in higher risk of microbial growth, thus reducing the shelf life of the food products, and, subsequently, a higher risk of food poisoning. Furthermore, a higher ambient temperature around the food products followed by re-freezing, such as when a consumer has brought the capsule home from the store and put it in his/her own freezer or during defrosting of the freezer in the store, results in freeze burns and in the formation of undesirable crystals in and on the food products.

GB 2 383 402 discloses a heat insulated container. The container is assembled by the user by first assembling a cardboard box by erecting it and sealing certain portions of it to each other through the use of tape. Thereafter insulating self supporting bottom and wall panels of polyethylene are placed along the corresponding inner sides of the cardboard box. The container can then be used as a cooling box with the aid of pre-frozen cooling elements, which are placed inside the box and around the products that are to be kept cold. Finally an insulating polyethylene top panel is placed on top of the products and cooling elements and the top of the cardboard box is sealed with tape. The heat insulating effect can be adjusted as required by using a number of insulating panels on top of each other, whereby the thickness of the overall insulation is variable. The rather complex assembly of the container in several steps renders it difficult and costly to automate production thereof.

CA 1 320 931 discloses a heat insulating packaging box of corrugated cardboard. In a corrugated cardboard a plurality of air containing channels are formed by the wave shaped core and the flat outer layers. In this design, movement of the air in said channels is interrupted by blocking partitions, whereby the insulating properties are improved. In a specific embodiment the disclosed box comprises a corrugated core of a foamed plastic sheet (instead of the more common corrugated core of cardboard). The plastic sheet, is used since it is easy to form the partitions from this plastic material. Additionally, a plastic film is in said embodiment attached to at least one of the cardboard liners surrounding the corrugated core. The plastic film is attached to the crests of the waves of the corrugated core. It is difficult to adapt existing process equipment, such as printing, creasing, and erecting equipment adapted to handle a thin smooth paper material to handle a corrugated paper material. Thus, this proposed solution is not an economically feasible alternative.

### Summary of the Invention

An object of the invention is to provide a package which has good heat insulating properties and which is adapted for automated processes in e.g. manufacturing, erecting and sealing.

This object is achieved according to the present invention by providing a package, a package blank and a method for producing a package.

The package is formed of a laminated package material comprising a first laminated package material layer, characterised in that the laminated package material further comprises a second laminated package material layer formed of a polymeric foam, and a laminating layer arranged between and binding said laminated package material layers to each other, wherein the first laminated package material layer forms an outside of the package and the second laminated package material layer forms an inside of the package.

The present invention is based on the finding that a laminated package comprising an insulating layer of polymeric foam is able to significantly prolong the time span from when the package is removed from a frozen environment, e.g. the freezer in a supermarket, until the content, or a part of the content, of the package acquires a temperature above 0 degrees Celsius, i.e. has thawed, as compared with conventional packages.

The foam layer also contributes to tightening the junctions formed at the sides of the package when the package has been erected, thus lessening the exchange of air with the surroundings of the package, thereby insulating the package even further and lessening the loss of moisture to the surroundings.

In order to facilitate the automated production of the package of the present invention the package material and the package blanks should preferably be adapted such that they may easily be handled by existing equipment for package erecting and handling, i.e. the package material need to physically resemble the commonly used paper, as described in the background section of the present description.

The packages according to the present invention are especially convenient for packaging food products.

The first laminated package material layer allows the packaging blank to be folded into a package and affords stability to said package.

The second laminated package material layer improves the heat insulating properties of the laminate. The foam of this layer traps and immobilises air within its structure, thereby preventing the air from transporting heat from one side of the laminate to the other.

The laminating layer binds the first and second laminated package material layers to each other, acting as a glue, and forms a laminate together with said laminated package material layers. The laminate thus formed should preferably be continuous, i.e. there should be essentially no gaps between the first and second laminating layers, and strong enough to sustain a seal.

Since the foam layer and the first packaging layer are laminated together the automation of package production is facilitated as the laminated package material does not consist of several intermovable layers, which would make the package assembly complex, time consuming and costly. The laminate may thus be handled by existing equipment for package erecting and handling. The package of the present invention is thus produced from a laminate where all the components of the laminate are already firmly adhered to each other in a desired way prior to erection of the package.

Preferred embodiments follow from the dependent claims.

The first laminated package material layer is conveniently produced from a fibre material, preferably from cardboard, but any rigid or semi-rigid, foldable material may be used. Cardboard is preferred due to its low cost and because it is commonly used for this purpose and its properties in respect to packages are well known.

The second laminated package material layer may be produced from any suitable polymeric material but conveniently the material is selected from the group consisting of polyethylene (PE), polypropylene (PP) and polystyrene (PS); preferably the material is polyethylene.

PE is preferred for the second laminated package material layer due to its advantageous physical properties, notably its flexibility, processability and convenient melting point. PP can sometimes be preferable to PE as it is a more temperature resistant material, however It is also more costly. PS has superior insulating properties but may become brittle at low temperatures.

The laminating layer may be formed of any material which can adhere, or bind, both to the first and to the second laminated package material layers, such as a glue or a melted and subsequently solidified polymeric material. The glue may be solvent based or not, and may be a resin adhesive. However, in order to ensure a sufficient binding to the second laminated package material layer, and to facilitate the recycling of the package, it may be convenient to use the same material as used when producing the second laminated package material layer, As polyethylene has an advantageous melting point as mentioned above, and as its properties within this technological field are well known, it is a preferred material also for the laminating layer.

In choosing the optimal thickness of the laminated package material there are opposing requirements to consider. A thin laminate is advantageous with respect to material consumption, logistics, storage space, material cost and the environment, whilst a thicker laminate is advantageous as it provides stability and insulation to the package. Also, it is advantageous If the thickness of the package of the present invention falls within the working range of existing equipment for package erecting and handling. In order to achieve the objectives of the invention and still having a cost effective product which may be produced in an automated fashion the thickness of the laminate should conveniently be less than 4 mm, preferably less than 3 mm and most preferably between 1 and 2 mm.

The individual different laminated package material layers should be as thin as possible while still achieving the objectives of each layer as discussed above, i.e. the first laminated package material layer should be thick enough to form a stable and rigid package, and the second laminated package material layer should be thick enough to heat insulate the package sufficiently. Empirically it has been deduced that the first laminated package material layer should have a thickness of less than 2 mm, preferably between 0.3 and 1 mm, corresponding to approximately 100 to 500 g/m². If the first laminated package material layer is thicker than 2 mm problems will arise as the laminate gets too rigid to conveniently be formed into a package and there may be cracks formed when folding the laminate. If the first laminated package material layer is thinner than 0.3 mm it may not afford the package sufficient rigidity. The second laminated package material layer (foam) should have a thickness of less than 3 mm, preferably between 0.3 and 1.5 mm, corresponding to approximately 15-45 g/m². If the foam layer is thicker than 3 mm it will make the laminate unnecessary bulky and springy, which complicates the handling and printing of the laminate. Also it has been shown that a thicker foam layer only marginally improves the insulation. If the foam layer is thinner than 0.3 it may not afford sufficient insulation to the package.

The package blank is formed of a laminated package material comprising a first laminated package material layer, characterised in that the laminated package material further comprises a second laminated package material layer formed of a polymeric foam, and a laminating layer arranged between and binding said laminated package material layers to each other, wherein the first laminated package material layer is intended to form an outside of the package and the second laminated package material layer is intended to form an inside of the package.

The advantages of respective feature of the package blank have been discussed in detail in respect of the package; reference is made to that discussion. The features of the dependent claims in respect of the package are also applicable to the package blank. The advantages of respective feature are discussed in detail in respect of the package; reference is made to that discussion.

The method for producing a package comprises the steps of:
providing a first laminated package material layer,
providing a second laminated package material layer formed of a polymeric foam,
binding the first and the second laminated package material layers to each other, forming a laminate, by using a laminating layer arranged, between said laminated package material layers, and
forming a package from said laminate, wherein the first laminated package material layer forms an outside of the package and the second laminated package material layer forms an inside of the package.

The advantages of respective feature of the method have been discussed in detail in respect of the package; reference is made to that discussion. The features of the dependent claims in respect of the package are also applicable to the method. The advantages of respective feature are discussed in detail in respect of the package; reference is made to that discussion.

### Brief description of the drawings

The invention will hereinafter be described by way of examples with reference to the appended schematic drawings that show a presently preferred embodiment of the invention.

Figure 1 is a schematic cross-sectional view of the inventive laminate.

Figure 2 is a schematic plan view of the inventive package blank.

Figure 3 is a diagram of a thawing curve of the inventive package as compared to a conventional package.

### Detailed description of preferred embodiments

### Example 1

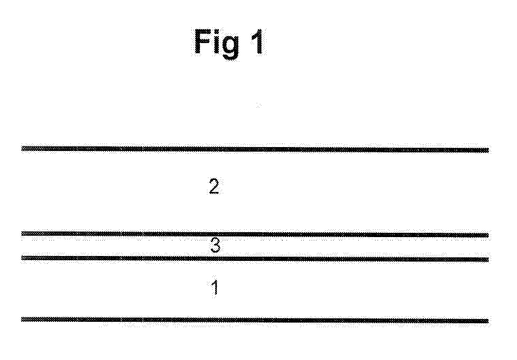

A laminated package material according to the present invention and schematically illustrated in Fig 1 was formed by continuously binding a first laminated package material layer 1 of cardboard and a second laminated package material layer 2 of polyethylene foam to each other by using a laminating layer 3 of molten polyethylene.

The cardboard (0,5 mm thick, 270 g/m²) starting material was provided on a reel, and the PE foam (1.5 mm thick, 30 g/m²) starting material was provided on another reel. The paper and the foam were both from their respective reels fed into a laminating machine where molten PE was extruded into the nip where the paper and foam are put and pressed together. During the process of pressing the materials together, the thickness of the PE foam is reduced from 1.5 mm to 1.0 mm. When the molten PE cooled down and solidified it bound the paper and the foam to each other and the laminate was formed. The laminate was in its turn put onto a reel at the other end of the laminating machine.

### Example 2

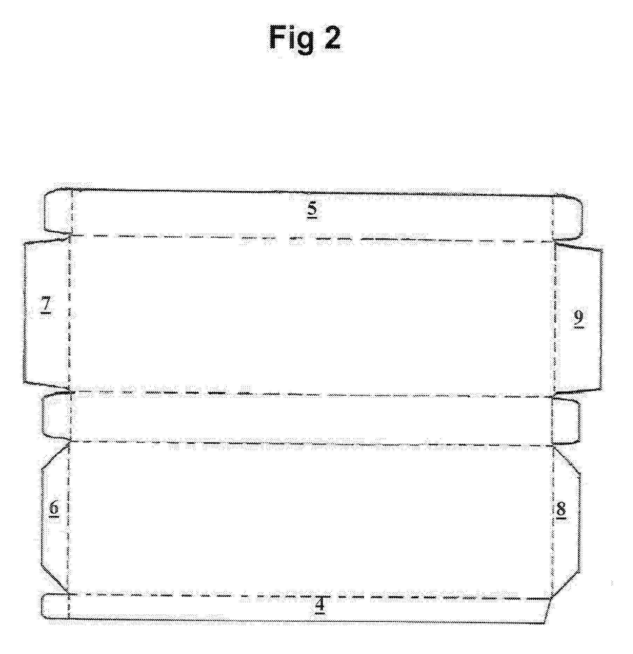

A package was formed from a package blank, schematically illustrated in Fig 2, produced from the laminate resultant from Example 1, and subsequently filled with a frozen food product.

The laminate of Example 1 was fed into a printing machine (offset) where the laminate was printed on one side. Thereafter package blanks were die cut out of the printed laminate and creased along the broken lines (Fig 2) using conventional machines specific for these functions.

The package blanks were then fed into a package erecting machine where the blanks were folded into an open ended box with the outer dimensions of 20×12×4 cm, by gluing the outside of panel 4 to the inside of panel 5 using hot-melt glue at 170°C.

The open box was transported to a filling machine where it was filled with 20 frozen fish sticks through an open end of the box, after which the box was closed and sealed by gluing the outside of panel 6 to the inside of panel 7, and the outside of panel 8 to the inside of panel 9, using hot-melt glue at 170°C. The package containing the frozen fish sticks was then put into a freezer awaiting shipping to food distributors.

### Example 3

The heat insulating ability of the package formed in Example 2 was compared to that of a conventional, uninsulated, cardboard package for frozen food.

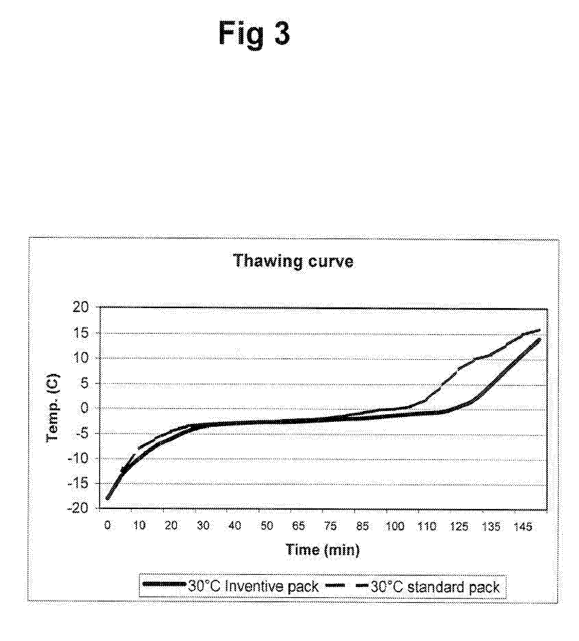

The filled conventional cardboard package was identical to the test package with the exception that it did not have a foam layer. It was formed, from cardboard (0,5 mm thick, 270 g/m²) with a thin coating of PE on the inside of the package. The two packages were removed from the freezer (-20°C) at the same time and placed in 30°C. The food temperatures of the two packages were measured every 5 minutes and the results are presented in Fig 3.

As is evident from Figure 3 the package according to the present invention significantly prolongs the time before the food product starts thawing, i.e. the food temperature rises above 0°C.

## Claims

1. A package formed of a laminated package material comprising a first laminated package material layer (1),
**characterised in that** the laminated package material further comprises a second laminated package material layer (2) formed of a polymeric foam, and a laminating layer (3) arranged between and binding said laminated package material layers to each other, wherein the first laminated package material layer (1) forms an outside of the package and the second laminated package material layer (2) forms an inside of the package.

2. A package according to claim 1, wherein the first laminated package material layer (1) is formed of a fibre material.

3. A package according to claim 1 or 2, wherein the polymeric foam (2) is formed of a material selected from the group consisting of polyethylene, polypropylene and polystyrene.

4. A package according to any one of the claims 1-3, wherein the laminating layer (3) is formed of a material which is adhereable to both the first laminated package material layer (1) and to the second laminated package material layer (2).

5. A package according to any one of the claims 1-4, wherein the laminating layer (3) is formed of the same material as the polymeric foam (2).

6. A package according to any one of the claims 1-5, wherein, the laminating layer (3) is formed of polyethylene.

7. A package according to any one of the claims 1-6, wherein the laminated package material has a total thickness of less than 4 mm, preferably less than 3 mm and most preferably between 1 and 2 mm.

8. A package according to any one of the claims 1-7, wherein the first laminated package material layer (1) has a thickness of less than 2 mm, preferably between 0.3 and 1 mm.

9. A package according to any one of the claims 1-8, wherein the second laminated package material layer (2) has a thickness of less than 3 mm, preferably between 0.3 and 1.5 mm.

10. A package blank formed of a laminated package material comprising a first laminated package material layer (1),
**characterised in that** the laminated package material further comprises a second laminated package material layer (2) formed of a polymeric foam, and a laminating layer (3) arranged between and binding said laminated package material layers to each other, wherein the first laminated package material layer (1) is intended to form an outside of the package and the second laminated package material layer (2) is intended to form an inside of the package.

11. A method for producing a package comprising the steps of :
providing a first laminated, package material layer (1),
providing a second laminated package material layer (2) formed of a polymeric foam,
binding the first and the second laminated package material layers to each other, forming a laminate, by using a laminating layer (3) arranged between said laminated package material layers, and
forming a package from said laminate, wherein the first laminated package material layer (1) forms an outside of the package and the second laminated package material layer (2) forms an inside of the package.
